# EUROPÄISCHE PATENTSCHRIFT

(11) **EP 1 456 567 B1**
(45) Veröffentlichungstag und Bekanntmachung des Hinweises auf die Patenterteilung: **17.10.2007**
(21) Anmeldenummer: 02795003.9
(22) Anmeldetag: 14.12.2002
(51) Int. Cl.: F16J 15/32

(54) **BÜRSTENDICHTUNG**
BRUSH SEAL
BROSSE D'ETANCHEITE

(30) Priorität: 22.12.2001 DE 10163804
(43) Veröffentlichungstag der Anmeldung: 15.09.2004
(73) Patentinhaber: MTU Aero Engines GmbH, 80995 München (DE)
(72) Erfinder: BEICHL, Stefan, 82211 Herrsching (DE); BUTZ, Carsten, 81377 München (DE); CERNAY, Christoph, 83052 Bruckmühl (DE); GAIL, Alfons, 86316 Friedberg (DE); MARCHINI, Adriano, 85748 Garching (DE); RAUSCHMEIER, Alexander, 80802 München (DE)
(86) Internationale Anmeldenummer: PCT/DE2002/004592
(87) Internationale Veröffentlichungsnummer: WO 2003/056216

(56) Entgegenhaltungen:
- WO-A-01/48404

## Beschreibung

Die Erfindung betrifft eine Bürstendichtung zum Abdichten relativ zueinander beweglicher Bauteile, mit einem Dichtungsteil, dessen mit ihren freien Enden zur Dichtfläche ausgerichteten von einem Borstenrücken gehaltenen Borsten von einer Stützplatte in ihrer vorbestimmten Arbeitslage gehalten sind.

Bei bekannten Bürstendichtungen dieser Art ist das die Borsten tragende Dichtungsteil in einem eine Deck- und eine Stützplatte aufweisenden rotationssymmetrischen Borstengehäuse derart eingespannt, dass die freien Enden der Borsten radial nach innen gegen die abzudichtende Fläche gerichtet sind; vgl. DE 100 18 273 A1 und WO-01/48404.

Solche zum Abdichten eines Rotors gegen einen Stator dienende Bürstendichtungen, deren Deck- und Stützplatten miteinander verschweißt oder durch andere Fügeverfahren (z.B. Bördeln) miteinander verbunden sind und die zudem einen falschen Einbau sowie ein Verdrehen der Bürstendichtung verhindernde Positionierungsmittel am Borstengehäuse aufweisen müssen, denen entsprechende Positionierungsmittel an einer Anlagefläche des die Bürstendichtung tragenden Bauteils zugeordnet sind, weisen einen aufwendigen Aufbau auf und sind nur zum Abdichten rotationssymmetrischer Körper geeignet.

Der Erfindung liegt die Aufgabe zugrunde, den Anwendungsbereich solcher Bürstendichtungen zu erweitern, deren Aufbau zu vereinfachen und derart weiterzubilden, dass diese zum Abdichten beliebig also auch räumlich gekrümmter Dichtflächen geeignet sind.

Ausgehend von einer Bürstendichtung der eingangs genannten Art ist diese Aufgabe erfindungsgemäß dadurch gelöst, dass die Stützplatte als selbständiges Klemmglied für das durch Einpressung in einer eine Anlagefläche für das Stützglied aufweisenden Ausnehmung des die Bürstendichtung tragenden Bauteils gehaltenen Dichtungsteil ausgebildet ist.

Die erfindungsgemäß Ausbildung umfasst lediglich ein Dichtungsteil und die die Borsten des Dichtungsteils in ihrer vorbestimmten Arbeitslage haltende als Klemmteil für das Dichtungsteil ausgebildete Stützplatte, die in beliebig gekrümmten Ausnehmungen in Form von Nuten des die Bürstendichtung tragenden Bauteils einpressbar ist und dabei eine kraft- und formschlüssige Befestigung für das Dichtungsteil bildet. Damit erübrigen sich der Aufbau des bisher üblichen verschweißten oder gebördelten Borstengehäuses und die Ausbildung von besonderen Positionierungsmitteln.

Für einen eventuell notwendigen Austausch des Dichtungsteils ist die Stützplatte aus der Nut zu entfernen. Für das Einsetzen eines neuen Dichtungsteils wird eine neue Stützplatte benötigt, da die bisherige Stützplatte beim Entfernen aus der Nut unbrauchbar wird.

Durch diese verblüffend einfache Ausbildung der durch Einpressung gehaltenen Teile der Bürstendichtung wird eine leichte und kostengünstige Montage und Demontage auch bei komplizierten Anwendungsfällen, die beliebig gekrümmte Dichtflächen umfassen, erreicht, was mit den bisher bekannten Bürstendichtungen nicht möglich war.

Nach einem bevorzugten Ausführungsbeispiel der Erfindung weist das als Stützplatte ausgebildete Klemmglied eine in den Bereich der Ausnehmung reichende den Borstenrücken des Dichtelements in der Ausnehmung klemmende Rändelung sowie eine mit der Anlagefläche der Ausnehmung korrespondierende Anlagefläche auf.

Nach einem weiteren Merkmal der Erfindung weist das als Stützplatte dienende Klemmglied eine mit der Anlagefläche der Ausnehmung korrespondierende Anlagefläche sowie in den Bereich der Ausnehmung reichende wechselseitige wellenförmige Vorsprünge auf, die einerseits in eine Hinterschnittfläche der Ausnehmung greifen und andererseits am Borstenrücken des Dichtungsgliedes anliegen.

Auch kann erfindungsgemäß das als Stützplatte dienende Klemmglied einen den Borstenrücken des Dichtungsgliedes teilweise umfassenden in die Ausnehmung des die Bürstendichtung tragenden Bauteils ragenden Bund aufweisen, dem eine der Anlagefläche gegenüberliegende Hinterschneidung in der Ausnehmung zugeordnet ist, während mittels einer Bördellippe des Bundes der Borstenrücken des Dichtungselementes zumindest teilweise umfasst ist.

Schließlich ist nach einer bevorzugten Ausführungsform der Erfindung der Bund der in die Ausnehmung einzupressenden Stützplatte an der den Borstenenden abgewandten Grundfläche mit einer mittigen Sicke versehen, die durch Einpressung des Dichtungsteils in die Ausnehmung derart dauerhaft verformbar ist, dass der Bund an den Wandungen der vorzugsweise als Nut mit schwalbenschwanzförmigem Querschnitt ausgebildeten Ausnehmung zur Anlage gelangt.

Die Erfindung ist nachfolgend anhand dreier in der Zeichnung dargestellte Ausführungsbeispiele beschrieben. Im Einzelnen zeigen:
- Fig. 1: eine Querschnittsansicht eines ersten Ausführungsbeispiels einer, Bürstendichtung gemäß der Erfindung,
- Fig. 2: eine Querschnittsansicht eines zweiten Ausführungsbeispiels einer Bürstendichtung gemäß der Erfindung,
- Fig. 3: eine Querschnittsansicht eines dritten Ausführungsbeispiels einer Bürstendichtung gemäß der Erfindung,
- Fig. 4: eine Querschnittsansicht eines vierten Ausführungsbeispiels einer Bürstendichtung gemäß der Erfindung vor der Einpressung in die sie haltende Ausnehmung und
- Fig. 5: das Ausführungsbeispiel nach Fig. 4 nach deren Einpressung.

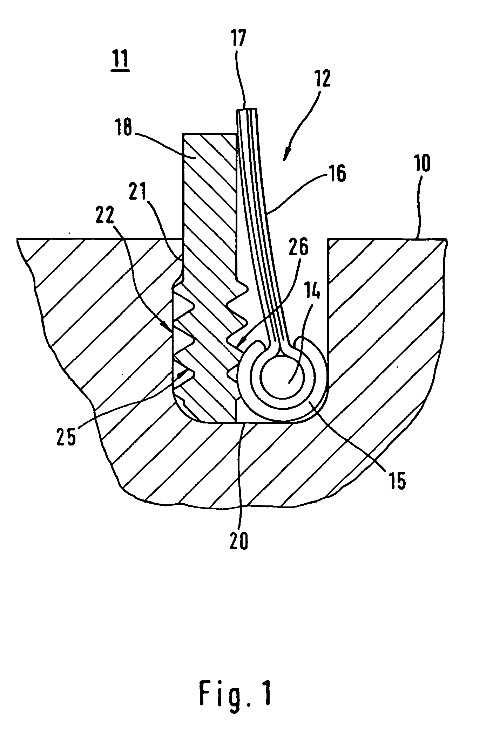

Von den mittels der nachfolgend zu beschreibenden Bürstendichtung gegeneinander abzudichtenden relativ zueinander beweglichen Bauteilen ist in Fig. 1 lediglich ein Ausschnitt des Bauteils 10 gezeigt, das die insgesamt mit der Bezugsziffer 11 bezeichnete Bürstendichtung aufnimmt.

Die Bürstendichtung umfasst ein Dichtungsteil 12, das von einem um einen Kerndraht 14 gelegten und von einer Spannhülse 15 in ausgerichteter Lage gehaltenen Borsten 16 gebildet wird sowie eine die freien Borstenenden 17 abstützende Stützplatte 18, alle diese Bauteile sind gemeinsam in einer Nut 20 im Bauteil 10 durch Einpressung fixiert sowie form- und kraftschlüssig gehalten. Der Kerndraht 14 und die Spannhülse 15 bilden den sogenannten Borstenrücken des Dichtungsteils 12. Das Dichtungsteil kann auch durch Klemmen, Schweißen, Löten oder Kleben hergestellt werden, anstelle der geklemmten Version gemäß Bezugszeichen 12.

Die eine Anlagefläche 21 und eine Hinterschneidung 22 aufweisende Nut 20 weist einen mit der nicht dargestellten Dichtfläche korrespondierenden Verlauf auf und bestimmt eine definierte eindeutige Positionierung des Dichtungsteil in Bezug auf das nicht dargestellte abzudichtende Bauteil, dem dessen Borstenenden zugewandt sind.

Zur form- und kraftschlüssigen Verbindung von Dichtungsteil und Stützplatte in der Nut weist die an der Anlagefläche 21 sich abstützende Stützplatte 18 an ihrem in die Nut 20 ragenden Ende beidseitig längsgerichtete Rändelungen 25 und 26 auf und greift mit der Rändelung 25 in die Hinterschneidung 22 der Nut 20 und in der dargestellten Lage mit der Rändelung 26 an der Spannhülse 15 des Dichtungsteils 12 klemmend an.

Nach Eindrücken des Borstenrückens des Dichtungsteiles und der Stützplatte in die Nut - wie in Fig. 1 dargestellt - ist das Dichtungsteil 12 mit dem Bauteil 10 kraft- und formschlüssig fest verbunden und sind die freien Enden 17 der Borsten 16 in einer vorbestimmten Lage entsprechend der geforderten Dichtwirkung stützend gehalten. Die Nut 20 des Bauteiles 10 bildet also ein Borstengehäuse.

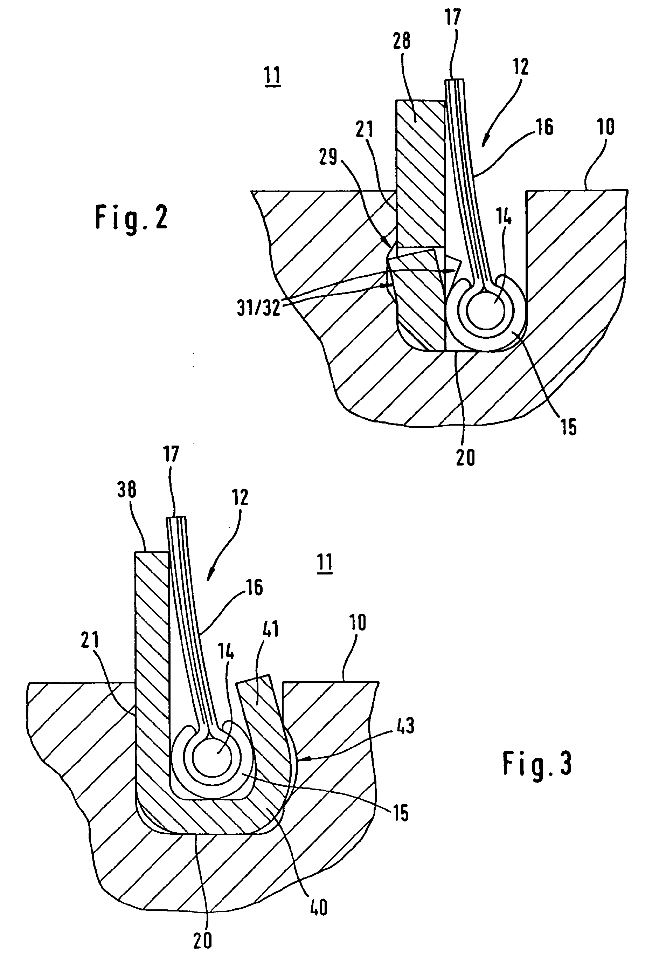

Das weitere Ausführungsbeispiel nach Fig. 2 zeigt ebenfalls lediglich einen Ausschnitt des die Nut 20 aufweisenden Bauteils 10, dass die insgesamt mit der Bezugsziffer 11 bezeichnete Bürstendichtung aufnimmt. Auch dort besteht die Bürstendichtung aus dem Dichtungsteil 12 und einer Stützplatte 28, die nach Einpressung in die Nut 20 eine form- und kraftschlüssige feste Verbindung mit dem Bauteil 10 bilden. Hierzu weist das in die Nut 20 ragende Ende der an der Anlagefläche 21 der Nut 20 sich abstützenden Stützplatte 28 wechselseitige wellenförmig abgebogene Vorsprünge 31 und 32 auf, von denen die vom Dichtungsteil abgewandten Vorsprünge 31 in eine Hinterschneidung 29 der Nut 20 eingreifen, während die Vorsprünge 32 an der Spannhülse 15, also am Borstenrücken des Dichtungsteils 12 diesen teilweise umfassend angreifen.

Bei dem in Fig. 3 dargestellten Ausführungsbeispiels einer Bürstendichtung ist ebenfalls ein Dichtungsteil 12 vorgesehen, das in gleicher Weise aufgebaut ist, wie es für das in Fig. 1 dargestellte Ausführungsbeispiel beschrieben ist. Dort ist also ebenfalls in einer Nut 20 eines die Bürstendichtung 11 tragenden Bauteils 10 die Bürstendichtung durch Einpressung form- und kraftschlüssig gehalten. Hierzu dient ebenfalls eine die Borsten 16 abstützende Stützplatte 38, die flächig an der Anlagefläche 21 der Nut 20 anliegt und in ihrem in die Nut 20 ragenden Bereich einen Bund 40 aufweist, der mit einer Bördelkante 41 die Spannhülse 15 des Borstenrückens teilweise umfasst. In der in Fig. 3 dargestellten eingepressten Lage greift der Bund 40 in eine zugeordnete Hinterschneidung 43 der Nut 20 ein, sodass auch bei dieser Ausführungsform über die Stützplatte 38 das Dichtungselement kraft- und formschlüssig in der Nut 20 gehalten ist.

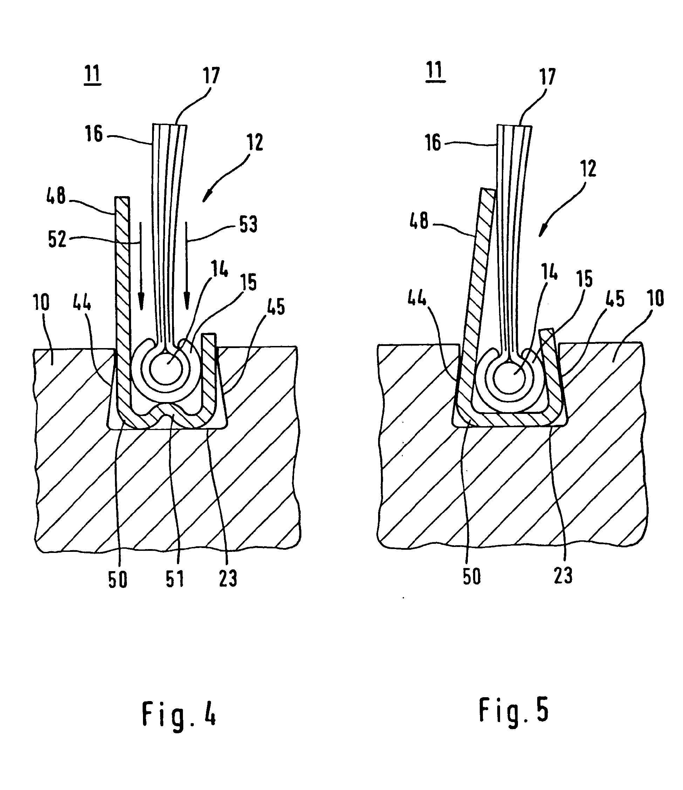

Das bevorzugte Ausführungsbeispiel nach den Fig. 4 und 5 weist ebenfalls ein Dichtungsteil 12 auf, das in gleicher Weise aufgebaut ist, wie es für das in Fig. 1 dargestellte Ausführungsbeispiel beschrieben ist.

Die das Dichtungsteil aufnehmende Ausnehmung im Bauteil 10 ist jedoch nunmehr in Form einer Nut 23 mit schwalbenschwanzförmigem Querschnitt ausgebildet, weist also - verglichen mit den bisherigen Ausführungsbeispielen - zwei entsprechende aber spiegelbildlich einander gegenüberliegende Hinterschneidungen 44 und 45 auf. Die mit der Bezugsziffer 48 bezeichnete Stützplatte hat ebenfalls einen der Nut 23 zugewandten, den Borstenrücken, also Kerndraht 14 und Spannhülse 15 teilweise umfassenden Bund 50, dessen dem Borstenende 17 abgewandte Grundfläche eine mittige Sicke 51 trägt; vgl. Fig. 4. Beim Einpressen von Stützplatte und Dichtungsteil in Richtung der Pfeile 52, 53 in die Nut 23 wird die Sicke 51 derart dauerhaft verformt, dass der Bund 50 zwecks Bildung der form- und kraftschlüssigen Verbindung an den Wandungen 44, 45 der Nut 23 zur Anlage gelangt, wie dies Fig. 5 zeigt. Die Stützplatte 48 nimmt dabei mit ihrem langen Schenkel die in Fig. 5 dargestellte Lage ein und hält die Borsten 16 in einer vorbestimmten Lage entsprechend der geforderten Dichtwirkung. Die Blechstärke der als Klemmglied dienenden Stützplatte 48 beträgt vorzugsweise 0,5 mm.

Allen vorstehend beschriebenen Ausführungsbeispielen ist gemeinsam, dass das Dichtungsteil mittels einer entsprechend geformten Stützplatte in der als Borstengehäuse dienenden, einer beliebig räumlich gekrümmten Dichtfläche folgenden Nut des die Borstendichtung tragenden Bauteils bei der Montage durch Einpressung kraft- und formschlüssig gehalten ist, und dass die Dichtung erst durch den Einbau des Dichtungsteils und der Stützplatte gebildet wird.

## Patentansprüche

1. Bürstendichtung zum Abdichten relativ zueinander beweglicher Bauteile mit einem Dichtungsteil, dessen mit ihren freien Enden zur Dichtfläche ausgerichteten, von einem Borstenrücken gehaltenen Borsten von einer Stützplatte in ihrer vorbestimmten Arbeitslage gehalten sind, **dadurch gekennzeichnet, dass** die Stützplatte (18, 28, 38) als selbständiges Klemmglied für das durch Einpressung in einer eine Anlagefläche (21) für das Stützglied aufweisenden Aufnehmung (Nut 20) des die Bürstendichtung (11) tragenden Bauteils gehaltene Dichtungsteil (12) ausgebildet ist.

2. Bürstendichtung nach Anspruch 1, **dadurch gekennzeichnet, dass** die als selbständiges Klemmglied ausgebildete Stützplatte (18) eine in den Bereich der Ausnehmung (Nut 20) reichende Rändelung (25, 26) aufweist, von der die einer Hinterschneidung (22) der Ausnehmung (Nut 20) zugewandte Rändelung (25) in die Hinterschneidung eingreift, während die gegenüberliegende Rändelung (26) am Borstenrücken (Kerndraht 14, Spannhülse 15) des Dichtungsteils (12) diesen in der Ausnehmung (Nut 20) form- und kraftschlüssig klemmend anliegt.

3. Bürstendichtung nach Anspruch 1, **dadurch gekennzeichnet, dass** das eine mit der Anlagefläche (21) der Ausnehmung (Nut 20) korrespondierende Anlagefläche aufweisende als Klemmglied wirkende Stützplatte (28) eine in den Bereich der Ausnehmung (Nut 20) ragende wechselseitig wellenförmig abgebogene Vorsprünge (31, 32) aufweist, die einerseits in eine Hinterschnittfläche (29) der Ausnehmung (Nut 20) greift, andererseits am Borstenrücken (Kerndraht 14, Klemmhülse 15) diesen in der Ausnehmung (Nut 20) form- und kraftschlüssig klemmend anliegen.

4. Bürstendichtung nach Anspruch 1, **dadurch gekennzeichnet, dass** die an der Anlagefläche (21) der Ausnehmung (Nut 20) anliegende als Klemmglied dienende Stützplatte (38) eine den Borstenrücken (Kerndraht 14, Klemmhülse 15) teilweise umfassenden in die Ausnehmung (Nut 20) des Bauteils (10) ragenden Bund (40) aufweist, der mit einer Bördelkante (41) den Borstenrücken umfassend in eine der Anlagefläche (21) gegenüberliegende Hinterschneidung (43) der Ausnehmung (Nut 20) derart eingreift, dass der Borstenrücken in der Ausnehmung form- und kraftschlüssig gehalten ist.

5. Bürstendichtung, insbesondere nach Anspruch 1, **dadurch gekennzeichnet, dass** die als selbständiges Klemmglied ausgebildete Stützplatte (48) einen in eine zwei einander gegenüberliegende Hinterschneidungen (44, 45) aufweisende Ausnehmung (Nut 23) des das Dichtungsteil (12) tragenden Bauteils (10) eingreifenden, den Borstenrücken (Kerndraht 14), Spannhülse (15), teilweise umfassenden Bund (50) aufweist, dessen den Borstenenden (17) abgewandte Grundfläche mit einer mittigen Sicke (51) versehen ist, die durch Einpressung (Pfeile 52, 53) des Dichtungsteils (12) in die Ausnehmung (Nut 23) derart dauerhaft verformbar ist, dass der Bund (50) an den Wandungen (44, 45) der Ausnehmung (Nut 23) zwecks form- und kraftschlüssiger Halterung des Dichtungsteils zur Anlage gelangt.

6. Bürstendichtung nach Anspruch 5, **dadurch gekennzeichnet, dass** die Ausnehmung als Nut (23) mit schwalbenschwanzförmigem Querschnitt ausgebildet ist, deren einander gegenüberliegende Wandungen (44, 45) Hinterschneidungen bilden.

## Claims

1. A brush seal for sealing components which can move relative to one another, with a sealing part whose bristles, which are held by a bristle backing with their free ends aligned with the sealing face, are held in their predetermined working position by a support plate, **characterised in that** the support plate (18, 28, 38) is formed as an independent clamping member for the sealing part (12), which is held by pressing it into a recess (groove 20), having a bearing face (21) for the support member, of the component carrying the brush seal (11).

2. A brush seal according to Claim 1, **characterised in that** the support plate (18) formed as an independent clamping member has knurling (25, 26) which reaches into the region of the recess (groove 20) and of which the knurling (25) that faces an undercut (22) of the recess (groove 20) engages in the undercut, while the opposite knurling (26) lies against the bristle backing (core wire 14, clamping sleeve 15) of the sealing part (12) so as to clamp this in a positive and press-fitting manner in the recess (groove 20).

3. A brush seal according to Claim 1, **characterised in that** the support plate (28), which comprises a bearing face which corresponds with the bearing face (21) of the recess (groove 20) and acts as a clamping member, comprises projections (31, 32) which reach into the region of the recess (groove 20), are bent alternately in an undulating manner and engage in an undercut area (29) of the recess (groove 20) on one side and lie against the bristle backing (core wire 14, clamping sleeve 15) on the other so as to clamp this in a positive and press-fitting manner in the recess (groove 20).

4. A brush seal according to Claim 1, **characterised in that** the support plate (38) lying against the bearing surface (21) of the recess (groove 20) and serving as a clamping member includes a collar (40) which partly embraces the bristle backing (core wire 14, clamping sleeve 15), projects into the recess (groove 20) of the component (10) and engages in an undercut (43) of the recess (groove 20) lying opposite the bearing face (21) with a flanged edge (41), embracing the bristle backing, in such a way that the bristle backing is held in a positive and press-fitting manner in the recess.

5. A brush seal, in particular according to Claim 1, **characterised in that** the support plate (48) formed as an independent clamping member comprises a collar (50) which engages into a recess (groove 23), comprising two mutually opposite undercuts (44, 45), of the component (10) carrying the sealing part (12) and partly embraces the bristle backing (core wire 14, clamping sleeve 15), and whose base remote from the bristle ends (17) is provided with a central bead (51) that can be permanently deformed by pressing (arrows 52, 53) the sealing part (12) into the recess (groove 23) in such a way that the collar (50) comes to lie against the walls (44, 45) of the recess (groove 23) for the purpose of holding the sealing part in a positive and press-fitting manner.

6. A brush seal according to Claim 5, **characterised in that** the recess is formed as a groove (23) with a dovetail cross-section whose mutually opposite walls (44, 45) form undercuts.

## Revendications

1. Brosse d'étanchéité pour réaliser l'étanchéité de pièces mobiles l'une par rapport à l'autre comprenant une pièce d'étanchéité dont les extrémités libres sont tournées vers la surface d'étanchéité, dont les brosses tenues par un dos sont maintenues dans une position de travail prédéfinie par une plaque d'appui,
**caractérisée en ce que**
la plaque d'appui (18, 28, 38) est un organe de serrage indépendant pour la pièce d'étanchéité (12) enfoncée dans une cavité ou rainure (20) ayant une surface d'appui (21) pour l'organe d'appui, cette rainure étant réalisée dans la pièce portant la brosse d'étanchéité (11).

2. Brosse d'étanchéité selon la revendication 1,
**caractérisée en ce que**
la plaque d'appui (18) réalisée comme organe de serrage indépendant comporte un moletage (25, 26) arrivant dans la zone de la cavité ou rainure (20) et dont le moletage (25) tourné vers la partie en contredépouille (22) de la cavité ou rainure (20) vient prendre dans la partie en contredépouille, alors que le moletage opposé (26) s'applique par une liaison de forme et de force contre le dos de la brosse (fil formant le noyau 14, manchon de serrage 15) de la pièce d'étanchéité (12) dans la cavité ou rainure (20).

3. Brosse d'étanchéité selon la revendication 1,
**caractérisée en ce qu'**
une plaque d'appui (28) fonctionnant comme organe de serrage, ayant une surface d'appui correspondant à la surface d'appui (21) de la cavité ou rainure (20) présente les parties en saillie (31, 32) recourbées suivant une forme ondulée, alternant sur les côtés et venant dans la zone de la cavité en rainure (20) et ces parties en saillie venant prendre d'une part dans la surface en contredépouille (29) de la cavité en rainure (20) et d'autre part contre le dos de la brosse (fil de noyau 14, manchon de serrage 15) en s'appliquant contre celui-ci dans la cavité ou rainure (20) par une liaison de forme et de force pour le serrer.

4. Brosse d'étanchéité selon la revendication 1,
**caractérisée en ce que**
la plaque d'appui (38) servant d'organe de serrage et s'appliquant contre la surface d'appui (21) de la cavité en rainure (20) comporte une collerette (40) entourant en partie le dos de la brosse (fil de noyau 14, manchon de serrage 15) dans la cavité en rainure (20) de la pièce (10), et cette collerette coopère par son arête (41) en entourant le dos du balai dans une partie en contredépouille (43) de la cavité en rainure (20) en regard de la surface d'appui (21) de façon à obtenir le dos du balai dans la cavité par une liaison de forme et de force.

5. Brosse d'étanchéité selon la revendication 1,
**caractérisée en ce que**
la plaque d'appui (48) réalisée comme organe de serrage indépendant comporte une collerette (50) venant dans une cavité (rainure 23) ayant deux parties en contredépouille (44, 45) se faisant face de la pièce (10) portant la pièce d'étanchéité (12), en entourant en partie le dos de la brosse (fil de noyau 14, le manchon de serrage 15), collerette dont les extrémités (17) à l'opposé de la surface de base comportent une moulure (51) qui se déforme de manière permanente dans la cavité (rainure 23) par enfoncement (flèches 52, 53) de la pièce d'étanchéité (12), de façon que la collerette (50) vienne en appui contre les parois (44, 45) de la cavité (rainure 23) pour une fixation de la pièce d'étanchéité par une liaison de forme et de force.

6. Brosse d'étanchéité selon la revendication 5,
**caractérisée en ce que**
la cavité est réalisée comme rainure (23) à section en forme de queue d'aronde dont les parois (44, 45) qui se font face constituent des parties en contredépouille.
